# DEMANDE DE BREVET EUROPEEN

(11) **EP 3 076 266 A1**
(43) Date de publication de la demande: **05.10.2016**
(21) Numéro de dépôt: 16163765.7
(22) Date de dépôt: 04.04.2016
(51) Int. Cl.: G06F 1/16, E05B 73/00, G06F 21/88

(54) **PROCÉDÉ DE VERROUILLAGE D'UN DISPOSITIF NUMÉRIQUE TACTILE SUR UN SOCLE**

(30) Priorité: 03.04.2015 FR 1552935
(71) Demandeur: Intectra, 35530 Servon-Sur-Vilaine (FR)
(72) Inventeur: VENNIN, Stéphane, 35570 Vern sur Seiche (FR); KAUFFMANN, Benoit, 35150 Corps-Nuds (FR)
(74) Mandataire: Vidon Brevets & Stratégie

(57) **Abrégé**

La technique proposée se rapporte à un procédé de verrouillage, sur un socle, d'un châssis enfermant un dispositif numérique tactile. Un tel procédé comprend :
- une étape d'insertion (1), au sein d'une rainure aménagée sur ledit socle, d'une base dudit châssis ;
- une étape de mise en rotation (2) dudit châssis autour d'un axe de rotation défini au sein de ladite rainure, provoquant une solidarisation mécanique d'un premier moyen de verrouillage dudit socle avec un deuxième moyen de verrouillage complémentaire dudit châssis.

## Description

### 1. Domaine

Le domaine de l'invention est celui des dispositifs de sécurisation de dispositifs numériques tactiles. Il concerne plus particulièrement la sécurisation et l'utilisation de tablettes tactiles, à l'aide de dispositifs qui permettent de verrouiller et de déverrouiller rapidement une tablette sur un socle fixe.

### 2. Art antérieur

L'essor des tablettes tactiles, de plus en plus puissantes, connectées, peu encombrantes mais disposant néanmoins d'un écran de taille confortable, a permis le développement de nouveaux usages, notamment en milieu professionnel. Les gérants de points de vente par exemple se sont appropriés cet outil relativement bon marché et aux possibilités multiples pour développer des applications permettant d'informer et de conseiller les clients directement en magasin, lors de leur acte d'achat. D'abord utilisées comme simple écran de diffusion de contenus multimédia à des fin promotionnelles ou informatives, ces tablettes jouent de plus en plus le rôle de véritables bornes interactives permettant au client d'interagir avec une application dédiée afin d'obtenir l'information désirée, par exemple la référence du modèle d'essuie-glaces qui correspond à son véhicule.

La mise à disposition de tablettes à destination des clients a entrainé un besoin de sécurisation de ces appareils, afin notamment de les protéger physiquement mais également de se prémunir de leur vol par des personnes mal intentionnées. Ceci a conduit au développement de supports permettant de sécuriser une tablette sur un socle fixe (autrement dit de verrouiller cette tablette) de sorte qu'une personne non autorisée ne puisse pas la retirer de son socle d'accueil. Une telle sécurisation est par exemple mise en oeuvre au moyen d'un système classique de clé et de verrou permettant de fermer une armature dans laquelle la tablette est maintenue.

L'utilisation de tablettes tactiles au sein d'un point de vente n'est cependant pas limitée à des usages réservés aux clients : les applications développées peuvent également servir à accompagner le vendeur dans son acte de vente. Ainsi les grandes enseignes, et notamment les grandes enseignes spécialisées disposant de points d'information client, ont rapidement compris les avantages qu'elles pouvaient tirer d'un tel outil, et ses potentialités lorsqu'il est combiné à un socle d'accueil qui permet de verrouiller ou déverrouiller simplement la tablette en fonction des besoins du vendeur. Couplée à un socle présent au niveau du point d'information, la tablette remplace avantageusement un ordinateur fixe. Le socle assure l'alimentation et le rechargement de la tablette, et permet d'y raccorder divers périphériques tels qu'un clavier et une souris, qui facilitent son utilisation. Ainsi sécurisée sur son socle, en configuration fixe, la tablette se transforme alors en véritable station de travail pour le vendeur. Une fois déverrouillée, c'est à dire désolidarisée de son socle, la tablette retrouve son usage mobile, et permet par exemple au vendeur d'accompagner un client dans les rayons tout en continuant d'avoir accès à des supports d'aides à la vente ou des outils de productivité nomade. L'usage d'un socle d'accueil en complément d'une tablette permet ainsi de pouvoir l'utiliser indifféremment en configuration fixe ou mobile, selon le cas le plus adapté à la situation. Pour être efficace, un tel dispositif implique que le vendeur soit à même de déverrouiller rapidement sa tablette du socle, et de la verrouiller tout aussi rapidement sur ce socle. Des dispositifs mettant à profit l'utilisation de moyens d'authentification sans contact, tel que des clés électroniques ou des cartes sans contact, ont ainsi été développés en ce sens. Ces dispositifs présentent néanmoins l'inconvénient de nécessiter d'être alimentés électriquement pour assurer le verrouillage d'une tablette sur son socle. Ce point peut s'avérer problématique en cas de panne de courant par exemple, car la tablette ne peut alors plus être sécurisée sur son socle tant que le courant n'est pas rétabli. Un autre problème lié aux dispositifs existants est que les châssis proposés pour la protection de la tablette - qui restent solidaires de la tablette même en situation de mobilité et qui intègrent une partie des moyens permettant de la verrouiller sur le socle d'accueil - sont spécifiquement conçus pour s'adapter uniquement à un modèle de tablette donné. Aussi, lorsque le gérant d'un point de vente décide de renouveler le parc de tablettes équipant ses vendeurs par un modèle de tablette différent, il doit également renouveler l'ensemble des châssis pour les remplacer par un modèle de châssis adapté aux nouvelles tablettes choisies. Non seulement ceci engendre un surcoût important, mais encore faut-il qu'un tel modèle de châssis existe et soit disponible. Le gérant devient ainsi tributaire des dispositifs de sécurisation dans lesquels il a préalablement investi, qui restreignent l'éventail de choix de tablettes possibles en cas de renouvellement.

### 3. Résumé

La technique proposée offre une solution qui ne présente pas au moins certains de ces problèmes de l'art antérieur, grâce à un procédé original de verrouillage, sur un socle, d'un châssis enfermant un dispositif numérique tactile. Selon la technique proposée, un tel procédé comprend :
- une étape d'insertion, au sein d'une rainure aménagée sur ledit socle, d'une base dudit châssis ;
- une étape de mise en rotation dudit châssis autour d'un axe de rotation défini au sein de ladite rainure, provoquant une solidarisation mécanique d'un premier moyen de verrouillage dudit socle avec un deuxième moyen de verrouillage complémentaire dudit châssis.

Ainsi, le verrouillage d'un dispositif numérique tactile - une tablette ou un smartphone tactile par exemple - sur un socle d'accueil est réalisé de manière purement mécanique. De cette manière, même en l'absence d'alimentation électrique, comme ça peut être le cas lors d'une coupure de courant, il est possible de verrouiller la tablette sur son socle, pour la sécuriser contre le vol. Par ailleurs, cette sécurisation peut être effectuée rapidement, dans la mesure où elle résulte de mouvements simples, qui sont assimilables en pratique à une simple pose du châssis enfermant le dispositif numérique tactile sur un socle d'accueil. En particulier, aucune clé n'est requise pour opérer ce verrouillage. Enfin, le fait que ce verrouillage s'opère en deux temps (les deux étapes du procédé) offre une souplesse d'implémentation supplémentaire, en permettant notamment de séparer temporellement certaines opérations d'interconnexion du dispositif numérique tactile lorsqu'un utilisateur le dépose sur son socle d'accueil (à titre purement illustratif et non limitatif, il devient ainsi possible de dissocier le raccordement de la tablette aux divers périphériques connectés ou intégrés au socle du raccordement de la tablette à une source électrique).

Dans un mode de réalisation particulier de la technique proposée, ladite étape d'insertion, au sein d'une rainure aménagée sur le socle, d'une base du châssis, comprend une étape de mise en relation d'au moins un plot de centrage de ladite rainure avec au moins un trou de centrage associé dans ladite base dudit châssis.

Ainsi, la coopération de ces plots de centrage avec des trous de centrage associés, lorsque le châssis enfermant le dispositif tactile numérique est déposé dans ladite rainure, permet d'assurer un positionnement correct de l'ensemble, utile par exemple pour la mise en oeuvre des différents raccordements électriques d'une part (à des périphériques, à une source d'alimentation), et la mise en oeuvre du verrouillage d'autre part.

Dans un autre mode de réalisation particulier de la technique proposée, ladite solidarisation mécanique résulte de l'action du poids, sur ledit socle, de l'ensemble formé par ledit dispositif numérique tactile et son châssis.

Ainsi, même si le dispositif est déposé à la hâte sur son socle, son verrouillage reste assuré. En d'autres termes, il suffit que l'utilisateur dépose correctement sa tablette dans ladite rainure du socle, et la simple relâche de la tablette suffira, par action du poids de la tablette enchâssée sur le socle, à déclencher sa sécurisation.

Dans encore un mode de réalisation particulier de la technique proposée, ladite étape d'insertion, au sein d'une rainure aménagée sur ledit socle, d'une base dudit châssis provoque une mise en oeuvre d'un premier processus d'interconnexion dudit dispositif numérique tactile avec au moins un périphérique dudit socle.

De cette manière, le processus de détection et de reconnaissance, par le dispositif numérique tactile, de périphériques intégrés ou connectés au socle (une souris, un clavier, un lecteur de carte sans contact par exemple), est initié dès que le châssis enfermant ledit dispositif numérique tactile est inséré dans ladite rainure.

Selon encore un mode de réalisation particulier de la technique proposée, ladite solidarisation mécanique d'un premier moyen de verrouillage dudit socle avec un deuxième moyen de verrouillage complémentaire dudit châssis provoque une mise en oeuvre d'un deuxième processus d'interconnexion dudit dispositif numérique tactile avec au moins un dispositif d'alimentation électrique dudit socle.

Ainsi, le raccordement du dispositif numérique tactile à une source électrique permettant son rechargement n'est réalisé que lorsque la solidarisation mécanique d'un moyen de verrouillage du socle avec un moyen de verrouillage complémentaire du châssis est effective (par exemple lorsqu'un pêne d'un verrou de sécurisation présent dans le socle est engagé dans une gâche associée du châssis). De cette manière, le raccordement du dispositif numérique tactile à une source électrique est décalé temporellement du raccordement du dispositif numérique tactile aux autres périphériques intégrés ou connectés au socle. Un tel enchainement favorise notamment la prise en compte correcte, par ledit dispositif numérique tactile, de ces deux fonctionnalités (recharge et reconnaissance de périphériques).

Selon un autre aspect, la technique proposée se rapporte également à un dispositif de verrouillage, sur un socle, d'un châssis enfermant un dispositif numérique tactile, ledit dispositif étant intégré dans ledit socle. Un tel dispositif comprend :
- une rainure conformée pour permettre l'insertion d'une base dudit châssis ;
- un premier moyen de verrouillage apte à être solidarisé mécaniquement avec un deuxième moyen de verrouillage complémentaire dudit châssis, lorsque ledit châssis est mis en rotation autour d'un axe de rotation défini au sein de ladite rainure.

Dans un autre mode de réalisation particulier de la technique proposée, ladite rainure comprend au moins un plot de centrage apte à coopérer avec au moins un trou de centrage de ladite base du châssis.

Dans un autre mode de réalisation particulier de la technique proposée, ledit dispositif de verrouillage comprend des moyens de mise en oeuvre d'un premier processus d'interconnexion dudit dispositif numérique tactile avec au moins un périphérique dudit socle, lorsque ledit châssis est inséré au sein de ladite rainure.

Dans encore un autre mode de réalisation particulier de la technique proposée, ledit dispositif de verrouillage comprend également des moyens de mise en oeuvre d'un deuxième processus d'interconnexion dudit dispositif numérique tactile avec au moins un dispositif d'alimentation électrique dudit socle, lorsque lesdits premier et deuxième moyens de verrouillage sont solidarisés mécaniquement.

Dans un autre aspect, la technique proposée se rapporte également à un procédé de déverrouillage d'un châssis enfermant un dispositif numérique tactile, ledit châssis ayant été préalablement solidarisé à un socle par une mise en oeuvre du procédé de verrouillage décrit précédemment. Un tel procédé de déverrouillage comprend :
- une étape de lecture d'une donnée d'authentification soumise par un utilisateur;
- une étape de comparaison de ladite donnée d'authentification avec au moins une donnée de référence préalablement enregistrée, délivrant une autorisation de déverrouillage en cas de comparaison positive ;
- une étape de désolidarisation électromécanique du châssis et du socle, en cas d'obtention d'une telle autorisation de déverrouillage.

Ainsi, le déverrouillage peut également être effectué rapidement, dans la mesure où le procédé proposé autorise l'utilisation de moyens d'authentification sans contact ou biométriques pour libérer le dispositif numérique tactile de son socle. Le socle peut par exemple intégrer un lecteur de carte NFC (de l'anglais « Near Field Communication », pour communication en champ proche), ou encore un lecteur d'empreinte digitale. Le déverrouillage du dispositif numérique tactile est donc contrôlé électriquement, contrairement à son verrouillage sur le socle qui est réalisé de manière purement mécanique (en d'autres termes, le procédé de verrouillage peut être considéré comme autonome vis-à-vis du procédé de déverrouillage).

Selon une implémentation préférée, les différentes étapes du procédé de déverrouillage selon la technique proposée sont mises en oeuvre par un ou plusieurs logiciels ou programmes d'ordinateur, comprenant des instructions logicielles destinées à être exécutées par un processeur de données d'un dispositif de sécurisation selon la technique proposée et étant conçu pour commander l'exécution des différentes étapes du procédé.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de la technique proposée.

### 4. Liste des figures

D'autres caractéristiques et avantages de la technique proposée apparaîtront plus clairement à la lecture de la description suivante d'un mode de réalisation préférentiel de la technique proposée, donné à titre de simple exemple illustratif et non limitatif, et des dessins annexés parmi lesquels :
- la figure 1 présente une vue d'ensemble d'un dispositif de sécurisation d'une tablette, dans un mode de réalisation particulier de la technique proposée ;
- la figure 2 présente une vue en éclatée d'un châssis apte à accueillir une tablette, dans un mode de réalisation particulier de la technique proposée ;
- les figures 3a, 3b et 3c présentent un exemple de socle, respectivement vue de face, de profil et de derrière, dans un mode de réalisation particulier de la technique proposée ;
- la figure 4 présente un socle dont le plateau d'accueil est orienté en mode « portrait », dans un mode de réalisation particulier de la technique proposée ;
- la figure 5 présente une vue en éclatée d'un plateau d'accueil apte à accueillir une tablette installée dans son châssis, dans un mode de réalisation particulier de la technique proposée ;
- la figure 6 présente une vue schématique du verrouillage d'une tablette sur le plateau d'accueil d'un dispositif de sécurisation, dans un mode de réalisation particulier de la technique proposée.

### 5. Description détaillée

La technique proposée offre une solution simple et innovante aux contraintes qui peuvent parfois se poser lorsqu'il est nécessaire de pouvoir sécuriser rapidement un dispositif numérique, par exemple une tablette ou un smartphone, en le verrouillant sur un socle d'accueil. La présente technique se rapporte à titre préférentiel à des dispositifs numériques tactiles, mais peut également s'appliquer à d'autres dispositifs numériques non nécessairement tactiles, sans que cela remette en cause son principe général. Dans toute la suite du document, on considère, à des fins de simplification, que le dispositif numérique tactile est une tablette. Il va de soi qu'il s'agit là d'un exemple utilisé à titre purement illustratif et non limitatif, et que la présente description peut tout aussi bien s'appliquer à d'autres types de dispositifs numériques tactiles. Dans la suite du document, on utilise également les termes « verrouillage » ou « sécurisation », ainsi que leurs dérivés, pour désigner le fait qu'un châssis enfermant un dispositif numérique tactile tel qu'une tablette soit solidarisé avec un socle de sorte qu'un utilisateur non habilité ne puisse pas désolidariser ledit châssis dudit socle. De même, le terme « déverrouillage » et ses dérivés sont utilisés pour désigner le fait que le châssis enfermant la tablette est, ou a été, désolidarisé de son socle d'accueil par un utilisateur habilité. Par extension, les termes « verrouillage de la tablette » et « déverrouillage de la tablette » sont parfois utilisés pour désigner respectivement le verrouillage du châssis enfermant la tablette sur son socle d'accueil, et le déverrouillage du châssis enfermant la tablette hors de son socle d'accueil.

La technique proposée se rapporte donc à un procédé de verrouillage, sur un socle, d'un châssis enfermant un dispositif numérique tactile, une tablette par exemple. Le principe général de la présente technique repose sur la mise en oeuvre de deux étapes :
- une étape d'insertion, au sein d'une rainure aménagée sur le socle, d'une base du châssis ;
- une étape de mise en rotation du châssis autour d'un axe de rotation défini au sein de cette rainure, provoquant une solidarisation mécanique d'un premier moyen de verrouillage du socle avec un deuxième moyen de verrouillage complémentaire du châssis.

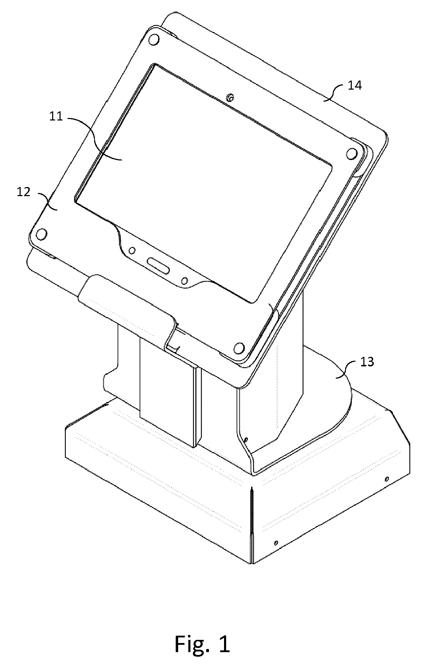

Le châssis et le socle forment ainsi un dispositif de sécurisation d'une tablette, qui offre également à un utilisateur habilité la possibilité de pouvoir déverrouiller rapidement la tablette dudit socle. Un tel dispositif présente de nombreux avantages, car il permet de basculer rapidement d'une configuration fixe à une configuration nomade, et inversement, en fonction des besoins de l'utilisateur de la tablette. On présente, en relation avec la **figure 1****,** une vue générale d'un tel dispositif. Une tablette (11) est maintenue enfermée dans un châssis (12). La tablette ainsi enchâssée peut être utilisée telle quelle, en situation de mobilité, ou bien verrouillée sur un socle (13) fixe. Ce socle comprend un plateau d'accueil (14), apte à coopérer avec le châssis (12), afin d'y sécuriser la tablette (11), pour une utilisation en configuration fixe. Les moyens de verrouillage et de déverrouillage de la tablette ainsi enchâssée, non représentés sur la figure 1, sont détaillés ultérieurement dans le document.

### 5.1 Caractéristiques du châssis

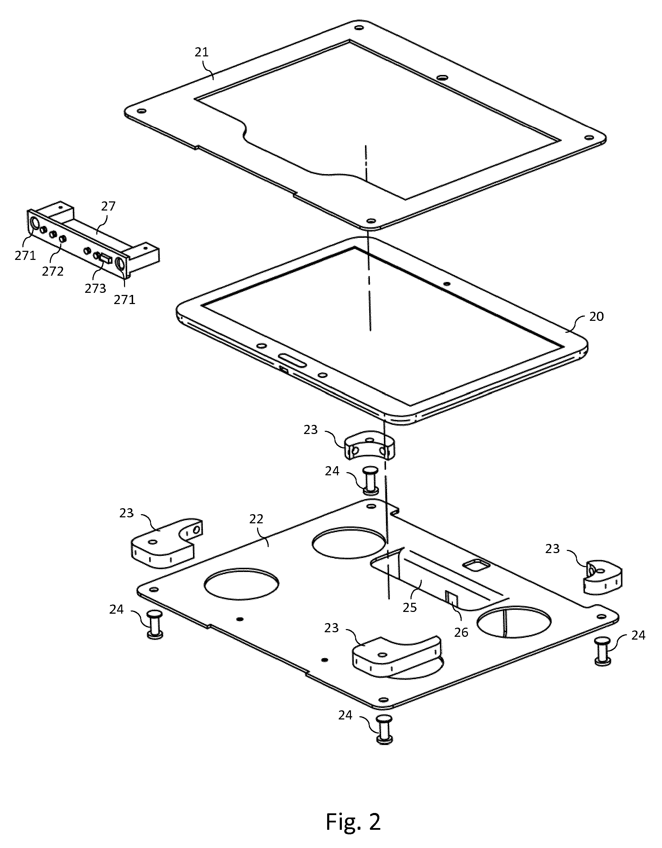

On présente, en relation avec la **figure 2****,** un châssis permettant d'accueillir une tablette (20), vu en éclaté, dans un mode de réalisation particulier de la présente technique. Ce châssis comprend une façade avant (21) et une façade arrière (22) entre lesquelles est maintenue la tablette (20). Ces deux façades (21, 22) présentent une forme globalement rectangulaire, et sont de dimensions sensiblement équivalentes. Elles peuvent être constituées de métal, par exemple d'aluminium, ou de tout autre matériau susceptible de conférer suffisamment de robustesse à l'ensemble pour protéger efficacement la tablette et résister à une tentative de dégradation.

Une fois la tablette (20) positionnée entre ces deux façades, elle est maintenue par des calages (par exemple des coins, des blocs latéraux, et/ou un ensemble monobloc) comprenant des butées en mousses ou en caoutchouc insérées dans un logement (trou ou échancrure) qui permettent l'élasticité de son placement et de son calage ainsi qu'une protection contre les chocs. Dans le mode de réalisation proposé en relation avec la figure 2, la tablette (20) est par exemple maintenue à ses quatre coins par des cales (23) (également dénommées « tampons ») qui, en complément des deux façades (21, 22), suppriment tout degré de liberté de la tablette dans son châssis. Ces cales sont fabriquées dans un matériau permettant d'amortir les chocs, par exemple du caoutchouc ou du polyéthylène haute densité (PEHD). Façades (21, 22) et cales (23) sont maintenues par des rivets (24), par exemple des rivets plastiques de type « snip & snap », ou tout autre moyen de fixation, qui permette de solidariser et sécuriser l'ensemble.

Les deux façades (21, 22) et les quatre cales (23) forment ainsi un châssis, au sein duquel la tablette (20) est maintenue enfermée et ne peut se déplacer, et lui confère une protection anti-choc.

Les façades avant et arrières (21, 22) sont ajourées de sorte de libérer l'accès aux différents éléments de la tablette permettant une interaction avec l'utilisateur : écran, boutons, lentilles des appareils photos intégrés, etc. D'autres évidements peuvent également être ménagés afin de réduire le poids du châssis, sans sacrifier la robustesse de l'ensemble.

Le châssis comprend également un bloc adaptateur (27) permettant de réaliser une adaptation de la connectique disponible sur la tablette (micro USB, lightning^{®}) vers un ensemble de contacteurs de type « Pogo Pin » (272). Une tablette comprend le plus généralement sur sa tranche un port principal (par exemple un port micro-USB, ou un port Lightning^{®}) permettant de la recharger et d'y connecter des périphériques, et parfois d'autres prises secondaires permettant de réaliser des fonctionnalités annexes (prise audio, prise vidéo, etc.). Le bloc adaptateur (27) permet de déporter cette connectique sur une base (une tranche) du châssis, les contacteurs (272) se chargeant alors d'assurer la connexion de la tablette aux diverses fonctionnalités offertes par le socle (alimentation, raccordement de périphériques, etc.) par le simple fait de poser cette tablette enchâssée dans une rainure aménagée sur ce socle (ceci évite à l'utilisateur d'avoir à brancher des câbles pour profiter des fonctionnalités enrichies offertes par une tablette sur son socle). Les façades avant et arrière (21, 22) du châssis sont dimensionnées et conformées de sorte qu'une fois une tablette montée dans ce châssis, il reste suffisamment de place pour accueillir le bloc adaptateur (27) entre ces deux façades, et faire courir le long de la tablette, au sein du châssis (autrement dit sans que ces câbles ne « débordent » du châssis), les câbles de connexion raccordant les différentes prises de la tablette audit bloc adaptateur (27). Ainsi, l'emplacement de la connectique disponible sur la tablette n'a pas d'importance, et les différentes prises peuvent toujours être connectées au bloc adaptateur (27) sans que ces connexions soient apparentes ou accessibles à l'utilisateur. Afin de permettre à un utilisateur de pouvoir continuer à recharger sa tablette ou y connecter des périphériques en situation de mobilité, quand la tablette n'est pas verrouillée sur son socle, le bloc adaptateur (27) comprend également un port (273) réplique du port principal disponible sur la tablette (utilisable en lieu et place du port principal, qui n'est plus disponible une fois la tablette installé dans son châssis). Enfin le bloc adaptateur (27) comprend au moins deux cavités (271), dénommées trous de centrage, destinées à coopérer avec des plots de centrage présents sur le plateau d'accueil, pour assurer un positionnement correct de la tablette lorsqu'elle est amenée à être verrouillée sur son socle. Un positionnement correct est un positionnement qui permet d'assurer à la fois le verrouillage de la tablette sur son socle, et la bonne coopération des contacteurs (272) avec les contacteurs correspondants présents sur ce socle. Dans un mode de réalisation particulier de la technique proposée, le bloc adaptateur (27) est fixé sur la façade arrière (22) du châssis, par exemple au moyen de vis ou collé, et sa tranche inférieure comprenant les contacteurs (272) affleure avec la tranche inférieure de ladite façade (22).

La façade arrière (22) comporte une partie proéminente (25), également dénommée « pli de retour », qui s'étend vers l'extérieur de la façade (22) (par extérieur, on entend le côté de la façade (22) qui n'est pas en contact avec la tablette (20), lorsque celle-ci est installée dans son châssis). Ce pli de retour (25) comprend un trou (26) destiné à faire office de gâche de serrure, apte à coopérer avec un pêne lorsque le châssis est positionné sur son socle d'accueil. Dans ce mode de réalisation, ce trou (26) constitue le moyen de verrouillage complémentaire du châssis.

Cette conception simple du châssis est avantageuse dans la mesure où un même châssis peut être adapté facilement et à moindre coût à de nombreux modèles de tablettes. Alors qu'un changement de modèle de tablettes implique un remplacement intégral du châssis dans de nombreuses solutions existantes, la technique proposée ici permet, dans la plupart des cas de n'avoir à remplacer que les cales (23), qui sont des pièces peu onéreuses. Différents jeux de cales, adaptées au plus grand nombre de tablettes, peuvent ainsi être fournies en même temps que le dispositif de sécurisation, permettant de s'adapter à un grand nombre de situations sans surcoût. Même en cas d'évolution plus marquée d'une gamme de tablette, par exemple une modification de la taille de l'écran, un remplacement intégral du châssis n'est pas nécessaire avec la technique proposée, puisque le seul remplacement de la façade avant (21), moins onéreux, s'avèrera suffisant dans la plupart des cas. Le châssis proposé ici est donc particulièrement modulable et peut être considéré à ce titre comme universel comparé aux solutions existantes, ce qui fait du dispositif de sécurisation présenté une solution particulièrement intéressante pour une entreprise qui exploite différents modèles de tablettes, ou qui prévoit de renouveler régulièrement son parc de tablettes.

Dans toute la suite du document, on utilise le terme « tablette enchâssée » pour désigner l'ensemble constitué par la tablette maintenue dans son châssis.

### 5.2 Caractéristiques du socle

Dans sa configuration fixe, la tablette est destinée à être verrouillée sur un socle. Différents types de socles peuvent être proposés en fonction de différents cas d'usage, selon par exemple que l'utilisation de la tablette soit réservée à un client ou à un vendeur au sein d'un point de vente. Le socle peut notamment intégrer de nombreuses fonctionnalités permettant d'enrichir l'expérience utilisateur lorsqu'une tablette y est installée, en transformant par exemple cette dernière en véritable station de travail fixe à laquelle peuvent être connectés de multiples périphériques. Ainsi, un clavier et une souris peuvent être branchés à demeure au socle, et être utilisés pour contrôler la tablette dès que celle ci est verrouillée sur le plateau d'accueil. Le socle peut également faire office de station de recharge, de synchronisation, et/ou de sauvegarde. Il peut aussi permettre d'enrichir la connectique disponible par défaut sur la tablette, en mettant par exemple de nombreux ports USB (de l'anglais « Universal Serial Bus ») à disposition de l'utilisateur.

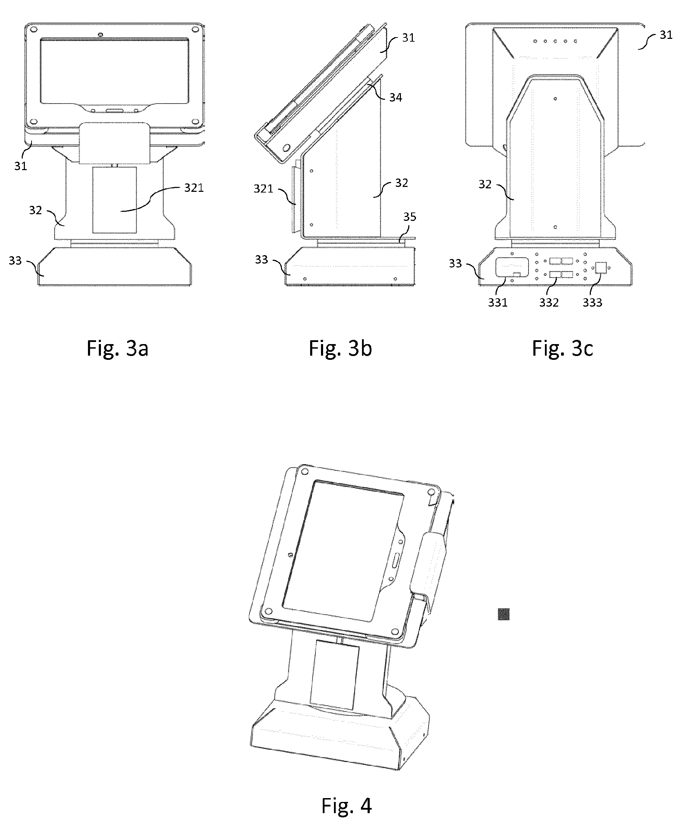

On présente, en relation avec les figures **3a, 3b et 3c**, un exemple de socle, dans un mode de réalisation particulier de la technique proposée. Cet exemple est donné à titre purement illustratif et non limitatif, et d'autres types de socles peuvent être proposés sans que cela remette en cause le principe général de la présente technique.

Ce socle proposé est articulé en trois parties respectivement dénommées plateau d'accueil (31), carter (32) et embase (33) dans le cadre du présent document. Les caractéristiques du plateau d'accueil (31) sont détaillées plus longuement dans la suite du document.

L'embase (33) est destinée à être posée ou fixée sur un élément du bâti (sol, bureau, comptoir). Elle intègre de la connectique qui permet de transformer une tablette en station de travail. Par exemple, l'embase (33) comprend une prise d'alimentation (331), des prises USB (332), une prise Ethernet (333), etc. La prise d'alimentation (331) sert à raccorder la tablette à une prise électrique - ce qui permet de l'alimenter et la recharger - mais peut également servir à alimenter d'autres composants ou périphériques intégrés dans le socle, tel qu'un concentrateur USB. Les prises USB (332) peuvent être utilisées pour raccorder tout type de périphériques à la tablette (clavier, souris, clé USB, disque dur, etc.). La prise Ethernet (333) permet par exemple de bénéficier d'une connexion réseau plus rapide et plus fiable que la connexion Wi-Fi utilisée en situation de mobilité. Il va de soi que cet exemple de connectique, et son emplacement, est donné à titre purement illustratif et non limitatif. Une partie des prises USB peut par exemple être déportée en façade, de sorte de les rendre plus faciles d'accès. D'autres type de prises peuvent également être proposées, comme une prise audio (prise casque), ou une prise HDMI par exemple. Certaines prises peuvent également, dans d'autres modes de réalisation particuliers du socle, être déportées au niveau du carter (32) ou du plateau d'accueil (31).

Afin de permettre à un utilisateur habilité de déverrouiller rapidement et simplement la tablette enchâssée de son socle, ce dernier comprend également, dans un mode de réalisation particulier de la technique proposée, un lecteur de cartes NFC (321). Pour déverrouiller la tablette, un utilisateur doit approcher une carte sans contact de ce lecteur. Si la carte sans contact est reconnue comme étant valide pour autoriser le déverrouillage de la tablette, une commande de déverrouillage est adressée au verrou (par exemple un verrou électromécanique) qui sécurise la tablette, de sorte qu'il s'ouvre durant un temps suffisant pour permettre de libérer la tablette enchâssée de son socle d'accueil. Le dispositif de sécurisation est donc apte à mettre en oeuvre un procédé de déverrouillage d'un châssis enfermant un dispositif numérique tactile, procédé qui comprend les étapes suivantes :
- une étape de lecture d'une donnée d'authentification soumise par un utilisateur (par exemple les informations contenues dans une carte sans contact);
- une étape de comparaison de cette donnée d'authentification avec au moins une donnée de référence préalablement enregistrée, délivrant une autorisation de déverrouillage en cas de comparaison positive ;
- une étape de désolidarisation électromécanique du châssis et du socle, en cas d'obtention d'une telle autorisation de déverrouillage.

L'utilisation d'un lecteur de cartes NFC constitue un mode de réalisation particulier de la technique proposée, et tout autre type de lecteur permettant la mise en oeuvre d'une authentification de préférence rapide peut également être employé : capteur infra-rouge, capteur RFID (de l'anglais « Radio Frequency Identification »), lecteur de données biométriques (par exemple lecteur d'empreinte digitale ou rétinienne), etc. Dans d'autres modes de réalisation, des lecteurs intégrés à même la tablette (tablettes disposant de technologie de lecture de cartes NFC, ou de reconnaissance d'empreinte digitale par exemple) peuvent être utilisés pour contrôler l'ouverture du verrou.

Le carter (32) et l'embase (33) permettent de sécuriser tous les composants nécessaires au bon fonctionnement du dispositif de sécurisation selon la technique proposé, ainsi que l'ensemble des câbles assurant leur interconnexion. Ils protègent par exemple les éléments suivants, qui sont donnés à titre purement illustratifs et non limitatifs : un concentrateur USB (afin de pouvoir connecter plusieurs périphériques sur une tablette à la connectique généralement très limitée), une carte relais (pour le contrôle d'un verrou électromécanique), un chargeur multiports USB (destiné à alimenter électriquement tous les composants du dispositif), etc.

Dans le mode de réalisation particulier décrit en relation avec les figures 3a, 3b et 3c, le carter (32) peut pivoter sur l'embase (33), au moyen d'une liaison pivot (35) ; et le plateau d'accueil (31) peut pivoter sur le carter (32), au moyen d'une liaison pivot (34). Dans le cadre d'une installation du dispositif sur un comptoir d'un point de vente par exemple, la liaison pivot (35) entre le carter (32) et l'embase (33) permet ainsi d'orienter l'écran de la tablette côté vendeur ou côté client, selon l'usage souhaité. Afin de faciliter l'utilisation de la tablette, le plateau d'accueil est incliné, par exemple à 45° vis-à-vis de l'horizontale, comme présenté sur la figure 3b. La liaison pivot (34) entre le plateau d'accueil (31) et le carter (32) est alors utilisée pour basculer la tablette en mode « portrait » ou « paysage », selon l'utilisation souhaitée. Alors que la figure 3a montre la tablette orientée en mode « paysage », la **figure 4** présente ainsi la tablette utilisée en mode « portrait » sur son socle, grâce à la rotation du plateau d'accueil.

### 5.3 Caractéristiques du plateau d'accueil

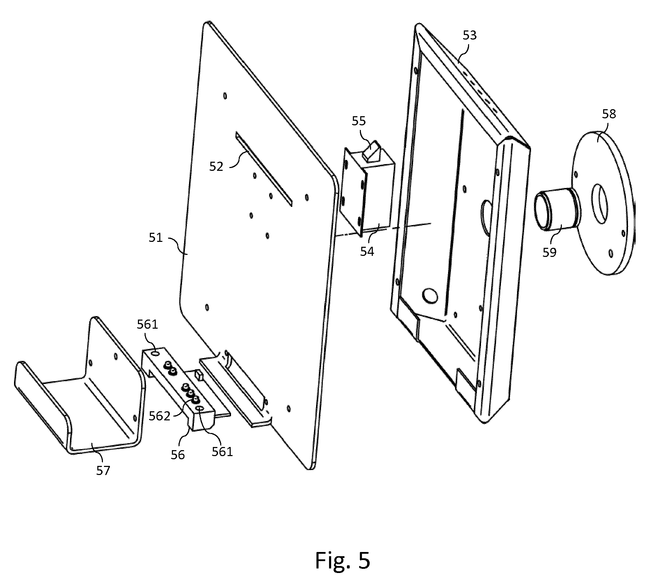

On présente, en relation avec la **figure 5****,** un exemple de plateau d'accueil vu en éclaté, dans un mode de réalisation particulier de la technique proposée. Ce plateau comprend une plaque de support (51) sur laquelle repose la tablette enchâssée lorsqu'elle est verrouillée sur son socle. Cette plaque de support (51) est de forme globalement rectangulaire, et ses dimensions sont par exemple proches de celles des façades du châssis de protection d'une tablette. A la base de la plaque de support (51), du côté réservé à l'accueil de la tablette enchâssée, un bloc adaptateur (56) est fixé. Ce bloc adaptateur est destiné à coopérer avec le bloc adaptateur intégré au châssis de protection de la tablette, de sorte d'assurer l'interconnexion de la tablette avec les différents composants et périphériques intégrés ou connectés au socle. L'interconnexion est réalisée au moyen d'un ensemble de contacteurs de type « Pogo Pin » (562). Un trou est ménagé dans la plaque de support (51), derrière le bloc adaptateur (56) afin de laisser passer les câbles qui connectent cet adaptateur aux différents composants intégrés au socle. Le bloc adaptateur (56) comprend également des emplacements de fixation (561) de plots de centrage (non représentés). Ces plots de centrage coopèrent avec les trous de centrages correspondants du bloc adaptateur du châssis, lorsque la tablette enchâssée est installée sur le plateau d'accueil, de sorte d'assurer que celle-ci est correctement positionnée pour que les deux blocs adaptateur (du châssis et du plateau d'accueil) coopèrent et que le verrouillage puisse être mis en oeuvre, par un mouvement de rotation du châssis dans la rainure.

Un verrou (54) est fixé sur le côté de la plaque de support (51) opposé à la surface d'accueil de la tablette enchâssée. Dans un mode de réalisation particulier de la technique proposée, ce verrou est un verrou électromécanique qui comprend un pêne (55) de type « bec-de-cane ». Des moyens élastiques compris dans le verrou (54) maintiennent ce pêne (55) sorti - autrement dit en position verrouillée - lorsque ce verrou électromécanique (54) n'est pas alimenté. Ce pêne constitue, dans ce mode de réalisation, le moyen de verrouillage du socle.

Une fente rectiligne traversante (52) s'étend sur une partie de cette plaque de support (51). Cette fente (52) est positionnée et dimensionnée de sorte que, lorsqu'une tablette enchâssée est correctement positionnée sur le plateau d'accueil, le pli de retour du châssis s'engage dans ladite fente (52), permettant alors à la gâche présente sur ce pli de retour et au pêne (55) du verrou (54) de coopérer et de se solidariser. Entre d'autres termes, la distance entre le bloc adaptateur (56) et la fente (52) du plateau d'accueil d'une part, et la distance entre le bloc adaptateur du châssis et le pli de retour du châssis d'autre part, sont délibérément choisies et fixées pour rendre possible l'insertion du pli de retour du châssis dans la fente (52) du plateau d'accueil, par une rotation du châssis dans la rainure. Pour pouvoir effectuer cette rotation, le châssis est posé dans la rainure, entrainant l'établissement d'un contact entre les contacteurs « Pogo Pin » respectifs de ces deux blocs adaptateurs. Cet aspect contribue à rendre le système universel et adaptable à tout type de tablette : quelque soit la tablette positionnée dans le châssis, et quelle que soit la forme du socle (simple socle destiné à la diffusion de contenus, ou socle plus évolué offrant des fonctionnalité de station de travail), si ces distances sont invariables, il sera toujours possible de verrouiller le châssis (et donc la tablette) sur le socle.

D'autres éléments complètent le plateau d'accueil présenté en relation avec la figure 5. Ainsi, un boitier de protection (53), fixé sur la plaque de support (51), est destiné à rendre inaccessible le verrou (54). Un capot (57) protège le bloc adaptateur (56). Ce capot (57), une fois installé, définit également, en liaison avec la plaque de support (51), une rainure pour l'insertion de la base d'un châssis, lors du verrouillage d'une tablette sur son socle d'accueil. D'autres pièces mécaniques (59, 58) contribuent à réaliser la liaison pivot entre le plateau d'accueil et le carter sur lequel il est installé, tout en permettant le passage des câbles nécessaires au fonctionnement du dispositif.

### 5.4 Verrouillage de la tablette

Les plots de centrage, intégrés au bloc adaptateur du plateau d'accueil, et les trous de centrage correspondants, intégrés au bloc adaptateur du châssis (à noter que l'inverse est également possible : les plots de centrage peuvent être intégrés au bloc adaptateur du châssis, et les trous de centrage au bloc adaptateur du plateau d'accueil), sont conformés et dimensionnés de sorte d'offrir suffisamment de liberté pour autoriser un mouvement de rotation partiel du châssis enfermant la tablette autour d'un axe de rotation défini au sein de la rainure où repose une base dudit châssis, lorsque plots de centrage et trous de centrage coopèrent. Cette conception autorise une sécurisation de la tablette en deux temps, que l'on peut qualifier de « poser -verrouiller » (ou, en anglais, « dock and lock »).

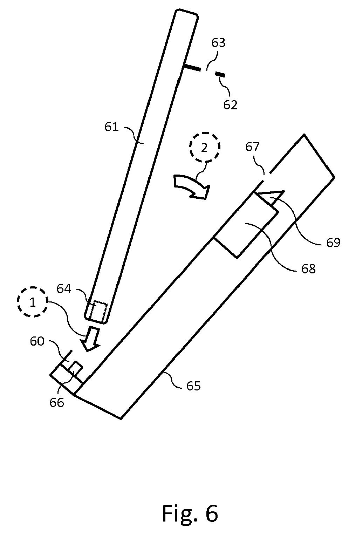

La **figure 6** illustre de façon schématique, vu en coupe et de profil, le procédé de verrouillage en deux étapes d'un châssis (61) enfermant une tablette sur le plateau d'accueil (65) d'un socle fixe, dans un mode de réalisation particulier de la technique proposée. Le socle, dont les autres éléments ne sont pas représentés sur la figure 6, est conçu de telle sorte que le plateau d'accueil (65) est incliné (par exemple d'un angle compris entre 10° et 80° par rapport à l'horizontale). Dans une première étape (1), l'utilisateur qui souhaite verrouiller la tablette sur son socle, insère la base du châssis (61) au sein d'une rainure (60) aménagée sur le plateau d'accueil (65), de sorte que les plots de centrage (66) présents sur le bloc adaptateur du plateau d'accueil pénètrent dans les trous de centrage (64) associés du bloc adaptateur du châssis (« dock »). Cette opération permet d'assurer une position correcte du châssis sur le socle, qui va permettre d'une part la coopération des deux blocs adaptateur - celui du châssis et celui du plateau d'accueil - afin que leurs contacteurs « Pogo Pin » respectifs entrent en contact, et d'autre part rendre possible l'engagement ultérieur du pli de retour (62) du châssis dans la fente (67) du plateau d'accueil (65). Dans une deuxième étape (2), l'utilisateur imprime à la tablette enchâssée (61) un mouvement de rotation autour d'un axe de rotation défini au sein de la rainure (60), vers le plateau d'accueil (65) (ce mouvement correspond globalement à une rotation du châssis autour de sa base insérée dans la rainure (60)). Cette mise en rotation ne nécessite pas obligatoirement une action volontaire de l'utilisateur : en fonction de l'angle d'inclinaison, cette mise en rotation peut être l'oeuvre de la gravité et du poids de la tablette te/ou du châssis, comme cela est explicité par la suite. Le pli de retour (62) du châssis s'engage alors dans la fente (67), et entre en contact avec le pêne (69) du verrou (68) fixé dans le plateau d'accueil (65). Sous l'action de ce mouvement, et de par la forme en bec-de-cane du pêne (69), ce dernier rentre progressivement dans le verrou (68), et les moyens élastiques qui le maintenaient sorti au repos se compriment. Une fois que la gâche (63) comprise sur le pli de retour (62) du châssis est en mesure de coopérer avec ledit pêne (69), les moyens élastiques se détendent et poussent le pêne (69) qui s'engage alors dans la gâche (63), entrainant du même coup le verrouillage de la tablette enchâssée (61) sur le socle (« lock »). En d'autres termes, la mise en rotation du châssis (61) autour de sa base insérée dans la rainure (60) provoque une solidarisation mécanique d'un moyen de verrouillage du socle avec un moyen de verrouillage complémentaire dudit châssis.

Dans un mode de réalisation particulier de la technique proposée, le poids de la tablette enchâssée (61), l'inclinaison du plateau d'accueil (65), et la résistance des moyens élastiques du verrou (68) sont conformées et dimensionnées de sorte que le poids de l'ensemble (61) formé par la tablette et son châssis suffise à assurer son verrouillage sur le socle. En d'autres termes, une fois la tablette enchâssée correctement insérée (1) dans la rainure (60) (« dock »), le mouvement de rotation (2) du châssis (61) vers le plateau d'accueil (65) et la solidarisation mécanique qui en résulte se font naturellement sous l'action du poids de la tablette enchâssée (61) sur le socle, sans que l'utilisateur ait besoin d'imprimer une quelconque poussée de la tablette en direction du plateau d'accueil (65). De cette manière, on assure la sécurisation de la tablette même si celle-ci est déposée à la hâte sur le plateau d'accueil (sans cette mesure, un vendeur pourrait croire sa tablette sécurisée, alors que pli de retour (62) serait en simple butée sur le pêne (69), et que ce dernier ne serait pas engagé dans la gâche (63). Il est important de noter ici que, dans tous les modes de réalisation particuliers proposés, le verrouillage de la tablette enchâssée sur son socle d'accueil est réalisé de manière purement mécanique et ne requiert pas d'électricité. Par ailleurs, il n'est pas nécessaire non plus que l'utilisateur dispose de la clé ou de la carte l'habilitant à déverrouiller la tablette de son socle, ou de tout autre clé ou carte ou dispositif d'authentification, pour pouvoir verrouiller la tablette enchâssée sur ce socle et ainsi la sécuriser. Autrement dit, le système de verrouillage de la tablette, purement mécanique, est autonome et indépendant du système de déverrouillage de la tablette.

La sécurisation en deux-temps (« dock and lock ») proposée ici présente des avantages. Les inventeurs ont notamment constaté que certains modèles de tablettes gèrent plus ou moins bien la mise en oeuvre d'une connexion simultanée à une source d'alimentation électrique d'une part (pour la recharge) et à des périphériques d'autre part (par exemple un clavier et une souris, pour la conversion en station de travail). En effet, avec une connexion réalisée simultanément, ou bien les périphériques sont reconnus, mais la recharge électrique n'est plus assurée, ou bien la recharge est assurée, mais les périphérique ne sont plus reconnus, et ceci de manière aléatoire et non systématique. Le procédé de verrouillage décrit dans la technique proposée, qui met en oeuvre un enchainement de deux étapes, permet en plus de résoudre ce type de problèmes, en autorisant un décalage temporel des connexions. Ainsi, dans un mode de réalisation particulier de la technique proposée, l'insertion de la tablette enchâssée au sein de la rainure aménagée à cet effet du socle (étape (1) de la figure 6, « dock ») provoque la mise en oeuvre d'un premier processus d'interconnexion de la tablette avec au moins un périphérique dudit socle (elle amorce par exemple la connexion et la reconnaissance, par la tablette, des périphériques USB connectés ou intégrés au socle) ; tandis que la solidarisation mécanique des moyens de verrouillage du châssis et du socle (étape (2) de la figure 6, « lock ») provoque la mise en oeuvre d'un deuxième processus d'interconnexion de la tablette avec au moins un dispositif d'alimentation électrique dudit socle (elle raccorde la tablette à un dispositif d'alimentation électrique, au moyen par exemple d'un interrupteur ou d'un relais actionné par l'enclenchement du pêne du verrou dans sa gâche). L'enchaînement de de ces interconnexions en deux temps distincts permet alors de garantir que la tablette ainsi sécurisée sur son socle répond bien simultanément aux deux fonctionnalités attendues que sont la recharge électrique, et la reconnaissance des périphériques qui y connectés.

Dans un mode de réalisation particulier de la technique proposée, le dispositif de sécurisation comprend également un interrupteur ou un bouton poussoir officiant comme moyen de réinitialisation de la connexion établie entre le socle et une tablette qui y est verrouillée. Un tel bouton peut par exemple s'avérer utile pour résoudre d'éventuels problèmes de périphériques mal reconnus lors du verrouillage, sans que l'utilisateur ait à retirer puis verrouiller à nouveau sa tablette sur le socle, ou encore pour forcer le rechargement électrique d'une tablette qui serait installée sur le socle alors qu'elle est totalement déchargée (donc éteinte). Ce dernier cas correspond à un des rares cas critiques où il est nécessaire que la tablette se comporte en esclave, et non plus en maître, vis-à-vis des périphériques qui lui sont connectés, afin que la phase de recharge puisse être initiée. A titre d'illustration, dans le cas où la tablette dispose d'une connectique principale de type USB OTG (de l'anglais «USB On-The-Go »), ces moyens de réinitialisation peuvent par exemple agir sur le raccordement de la broche USB « ID » à la masse, qui définit si un périphérique compatible avec cette technologie doit se comporter en maître ou en esclave. En interrompant momentanément ce raccordement, au moyen d'un tel bouton ou interrupteur, l'utilisateur a alors la possibilité de forcer la tablette à se comporter en esclave, et ainsi provoquer sa recharge.

## Revendications

1. Procédé de verrouillage, sur un socle, d'un châssis enfermant un dispositif numérique tactile, procédé **caractérisé en ce qu'**il comprend :
- une étape d'insertion (1), au sein d'une rainure aménagée sur ledit socle, d'une base dudit châssis ;
- une étape de mise en rotation (2) dudit châssis autour d'un axe de rotation défini au sein de ladite rainure, provoquant une solidarisation mécanique d'un premier moyen de verrouillage dudit socle avec un deuxième moyen de verrouillage complémentaire dudit châssis.

2. Procédé de verrouillage selon la revendication 1, **caractérisé en ce que** ladite étape d'insertion, au sein d'une rainure aménagée sur ledit socle, d'une base dudit châssis, comprend une étape de mise en relation d'au moins un plot de centrage de ladite rainure avec au moins un trou de centrage associé dans ladite base dudit châssis.

3. Procédé de verrouillage selon la revendication 1, **caractérisé en ce que** ladite solidarisation mécanique résulte de l'action du poids, sur ledit socle, de l'ensemble formé par ledit dispositif numérique tactile et son châssis.

4. Procédé de verrouillage selon la revendication 1, **caractérisé en ce que** ladite étape d'insertion, au sein d'une rainure aménagée sur ledit socle, d'une base dudit châssis provoque une mise en oeuvre d'un premier processus d'interconnexion dudit dispositif numérique tactile avec au moins un périphérique dudit socle.

5. Procédé de verrouillage selon la revendication 1, **caractérisé en ce que** ladite solidarisation mécanique d'un premier moyen de verrouillage dudit socle avec un deuxième moyen de verrouillage complémentaire dudit châssis provoque une mise en oeuvre d'un deuxième processus d'interconnexion dudit dispositif numérique tactile avec au moins un dispositif d'alimentation électrique dudit socle.

6. Procédé de déverrouillage d'un châssis enfermant un dispositif numérique tactile, ledit châssis ayant été préalablement solidarisé à un socle par une mise en oeuvre d'un procédé de verrouillage selon la revendication 1, procédé de déverrouillage **caractérisé en ce qu'**il comprend :
- une étape de lecture d'une donnée d'authentification soumise par un utilisateur;
- une étape de comparaison de ladite donnée d'authentification avec au moins une donnée de référence préalablement enregistrée, délivrant une autorisation de déverrouillage en cas de comparaison positive ;
- une étape de désolidarisation électromécanique dudit châssis dudit socle, en cas d'obtention de ladite autorisation de déverrouillage.

7. Dispositif de verrouillage, sur un socle, d'un châssis enfermant un dispositif numérique tactile, dispositif **caractérisé en ce qu'**il comprend :
- une rainure conformée pour permettre l'insertion d'une base dudit châssis ;
- un premier moyen de verrouillage apte à être solidarisé mécaniquement avec un deuxième moyen de verrouillage complémentaire dudit châssis, lorsque ledit châssis est mis en rotation autour d'un axe de rotation défini au sein de ladite rainure.

8. Dispositif de verrouillage selon la revendication 7, **caractérisé en ce que** ladite rainure comprend au moins un plot de centrage apte à coopérer avec au moins un trou de centrage de ladite base dudit châssis.

9. Dispositif de verrouillage selon la revendication 7, **caractérisé en ce qu'**il comprend des moyens de mise en oeuvre d'un premier processus d'interconnexion dudit dispositif numérique tactile avec au moins un périphérique dudit socle, lorsque ledit châssis est inséré au sein de ladite rainure.

10. Dispositif de verrouillage selon la revendication 7, **caractérisé en ce qu'**il comprend des moyens de mise en oeuvre d'un deuxième processus d'interconnexion dudit dispositif numérique tactile avec au moins un dispositif d'alimentation électrique dudit socle, lorsque lesdits premier et deuxième moyens de verrouillage sont solidarisés mécaniquement.
